# FASCICULE DE BREVET EUROPEEN

(11) **EP 4 616 023 B1**
(45) Date de publication et mention de la délivrance du brevet: **16.09.2026**
(21) Numéro de dépôt: 23810426.9
(22) Date de dépôt: 08.11.2023
(51) Int. Cl.: D03D 25/00, B29B 11/16, B29C 70/24, D03D 13/00, D03D 15/283, D03D 1/00, D03D 15/275, D03D 15/573, D03D 15/267

(54) **TEXTURE FIBREUSE POUR CARTER EN MATERIAU COMPOSITE AUX BRIDES RENFORCEES**
FASERTEXTUR FÜR EINE HÜLLE AUS VERBUNDMATERIAL MIT VERSTÄRKTEN FLANSCHEN
FIBROUS TEXTURE FOR A CASING MADE OF COMPOSITE MATERIAL WITH REINFORCED FLANGES

(30) Priorité: 09.11.2022 FR 2211655
(43) Date de publication de la demande: 17.09.2025
(73) Titulaire: SAFRAN AIRCRAFT ENGINES, 75015 Paris (FR)
(72) Inventeur: LEXILUS, Jean-Hilaire, 77550 Moissy-Cramayel (FR); BOUROLLEAU, Clément, 77550 Moissy-Cramayel (FR)
(74) Mandataire: Cabinet Beau de Loménie
(86) Numéro de dépôt international: PCT/FR2023/051752
(87) Numéro de publication internationale: WO 2024/100357

(56) Documents cités:
- WO-A1-2021/260291
- WO-A1-2022/117938
- US-A1- 2021 292 938
- @BULLET: "AGY's Ultrafine E-Glass yarns Ultrafine E-Glass Yarns High Performance Yarns for IC Substrate and Multilayer PCB Applications PRODUCT INFORMATION", 31 December 2014 (2014-12-31), XP093048816, Retrieved from the Internet <URL:https://www.agy.com/wp-content/uploads/2021/12/Ultrafine_E-Glass_Sheet-Electronics.pdf> [retrieved on 20230523]
- "ZYLON (PBO FIBER) TECHNICAL INFORMATION (2005)", INTERNET CITATION, 1 June 2005 (2005-06-01), XP002421336, Retrieved from the Internet <URL:http://www.toyobo.co.jp/e/seihin/kc/pbo/menu/fra_meu_en.htm> [retrieved on 20070101]
- AVK: "Handbuch Faserverbundkunststoffe", HANDBUCH FASERVERBUNDKUNSTSTOFFE/COMPOSITES : GRUNDLAGEN, VERARBEITUNG, ANWENDUNGEN, 31 December 2014 (2014-12-31), Wiesbaden, XP093048945, ISBN: 978-3-658-02754-4, Retrieved from the Internet <URL:https://link.springer.com/book/10.1007/978-3-658-02755-1> [retrieved on 20230523]

## Description

### Domaine Technique

L'invention concerne les carters de turbine à gaz, et plus particulièrement, mais non exclusivement, les carters de soufflante de turbine à gaz pour moteurs aéronautiques.

### Technique antérieure

La fabrication d'un carter en matériau composite débute par la réalisation d'une texture fibreuse sous forme de bande, la texture fibreuse étant réalisée par tissage tridimensionnel entre une pluralité de couches de fils de chaîne et une pluralité de couches de fils de trame. La texture fibreuse ainsi obtenue est enroulée sur plusieurs tours sur un moule ou un outillage présentant la forme du carter à réaliser et maintenue entre le moule et des segments formant contre-moule de manière à obtenir une préforme fibreuse.

Une fois la préforme fibreuse réalisée, c'est-à-dire à la fin de l'enroulement de la texture fibreuse, l'outillage portant la préforme fibreuse est fermé par des contre-moules puis transporté jusqu'à une étuve ou un four dans lequel la densification de la préforme par une matrice est réalisée, la matrice pouvant être notamment obtenue par injection et polymérisation d'une résine dans la préforme fibreuse.

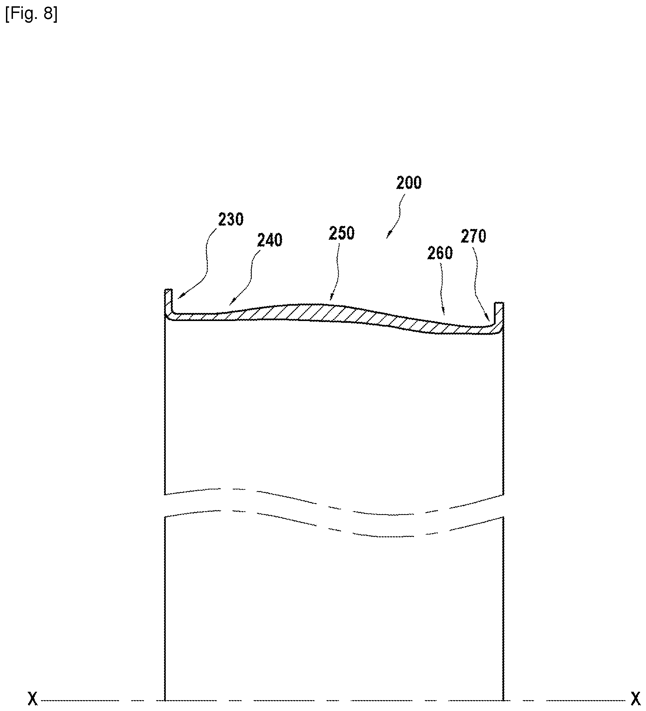

La figure 8 illustre un carter de soufflante 200 en matériau composite obtenu comme décrit précédemment. Le carter de soufflante 200 comprend des brides amont et aval 230 et 270 destinées à être fixées respectivement à une manche d'entrée d'air et à une virole de carter intermédiaire (non représentées sur la figure 8). Le carter 200 comprend également une zone de rétention 250 située entre une zone structurale amont 240 et une zone structurale aval 260.

Un carter de soufflante remplit trois fonctions principales, à savoir :
- assurer la liaison de pièces du moteur entre elles,
- définir la veine d'entrée d'air dans le moteur,
- assurer la rétention en retenant les débris ingérés à l'intérieur du moteur, ou les aubes ou fragments d'aubes projetés par centrifugation, afin d'éviter qu'ils ne traversent intégralement le carter et que des débris à hautes énergies soient libérés.

Les deux premières fonctions s'avèrent peu exigeantes en termes de propriétés mécaniques mais sont actives en permanence. En revanche, la troisième fonction, même si elle est très peu utilisée, est très exigeante en termes de propriétés mécaniques. A cet effet, la quantité, la nature et l'agencement des fibres sont définies de manière optimisée dans la zone de rétention du carter afin d'être apte à supporter un impact et à retenir les fragments d'aube ou des objets à hautes énergies. Un exemple de carter de soufflante en matériau composite avec une zone de rétention renforcée est décrit notamment dans le document US 2020/271015.

WO 2022/117938 A1 divulgue une texture fibreuse et un procédé de fabrication d'une texture fibreuse.

Cependant, lors d'un évènement de perte d'aube de soufflante (FBO ou Fan Blade Out), une onde de choc se produit et se propage depuis la zone d'impact (zone de rétention) vers toutes les zones du carter, en particulier les brides. Une vague de déformation précède la vague d'impact. Dans certains cas, cette onde de choc génère de telles déformations des brides du carter que celles-ci se retrouvent fortement sollicitées en traction et en compression, au-delà des limites matériaux. Ces sollicitations peuvent alors, à leur tour, générer des fissures dans ces brides, puis propager le front de fissure jusqu'à des dimensions inacceptables remettant en cause l'intégrité mécanique du carter de soufflante

Ainsi, il existe un besoin pour optimiser les propriétés mécaniques des brides du carter afin de supporter l'onde de choc après l'impact provoqué par un évènement de perte d'aube.

### Exposé de l'invention

A cet effet, l'invention propose une texture fibreuse présentant une forme de bande s'étendant dans une direction longitudinale sur une longueur déterminée entre une partie proximale et une partie distale et dans une direction latérale sur une largeur déterminée entre un premier bord latéral et un deuxième bord latéral, la texture fibreuse présentant un tissage tridimensionnel entre une pluralité de couches de torons de chaîne s'étendant dans la direction longitudinale et une pluralité de couches de torons de trame s'étendant dans la direction latérale,
caractérisée en ce que la texture fibreuse comprend des première à cinquième portions s'étendant chacune sur la longueur déterminée de la texture fibreuse suivant la direction longitudinale et sur une largeur déterminée suivant la direction latérale, la première portion s'étendant suivant la direction latérale à partir du premier bord latéral, la deuxième portion s'étendant suivant la direction latérale à partir de la première portion, la troisième portion s'étendant suivant la direction latérale à partir de la deuxième portion, la quatrième portion s'étendant suivant la direction latérale à partir de la troisième portion, la cinquième portion s'étendant suivant la direction latérale à partir de la quatrième portion et jusqu'au deuxième bord latéral, les première et cinquième portions présentant une largeur suivant la direction latérale supérieure à la largeur des deuxième et quatrième portions et inférieure à la largeur de la troisième portion,
en ce que les première et cinquième portions comprennent chacune des torons de chaîne constitués d'un premier type de fibres correspondant à des fibres de carbone ayant un module d'Young supérieur à 290 GPa et un allongement à rupture compris entre 1,2% et 2% et des torons de chaîne constitués d'un deuxième type de fibres ayant un module d'Young compris entre 150 GPa et 250 GPa et un allongement à rupture compris entre 4% et 6%,
et en ce que les deuxième et quatrième portions comprennent chacune des torons de chaîne constitués du premier type de fibres, des torons de chaîne constitués du deuxième type de fibres, et des torons de chaîne constitués d'un troisième type de fibres correspondant à des fibres de carbone ayant un module d'Young supérieur à 250 GPa et un allongement à rupture compris entre 1,5% et 2,5%, la troisième portion comprenant des torons de chaîne constitués du troisième type de fibres.

La texture fibreuse selon l'invention permet de réaliser des carters avec des brides aux propriétés mécaniques améliorées. En effet, les torons de chaîne constitués du deuxième type de fibres sont majoritairement présents dans les première et cinquième portions de la texture fibreuse destinées à former les brides amont et aval du carter. La texture fibreuse de l'invention permet après mise en forme de former un renfort fibreux de carter dans lequel les parties formant les brides amont et aval comprennent des fibres (deuxième type de fibres) présentant une raideur (module d'Young) inférieure à celles des autres fibres (premier et deuxième type de fibres) du renfort mais un allongement à rupture supérieur. Les brides du carter en matériau composite comprenant un tel renfort fibreux sont ainsi plus aptes à supporter sans détérioration les déformations mécaniques imposées par l'onde de choc propagée après un impact sur la zone de rétention. L'idée étant d'avoir une transition la plus douce possible entre une préforme tout-carbone dans le fût et tout-verre en bout de brides, avec une introduction progressive dans la préforme des torons de verre. Une variation trop brutale engendrerait une concentration de contrainte et donc un effet néfaste.

Les autres parties du renfort fibreux destinées à former les zones structurales amont et aval et la zone de rétention présentent une raideur plus importante par la présence majoritaire de fibres de carbone (premier et deuxième types de fibres) ayant un module d'Young supérieur à celui des fibres du deuxième type de fibres.

Selon une caractéristique particulière de la texture fibreuse de l'invention, dans les première et cinquième portions de la texture fibreuse, les torons de chaîne constitués du deuxième type de fibres sont présents au niveau des faces inférieure et supérieure de la texture et au niveau des premier et deuxième bords latéraux de ladite texture, les torons de chaîne constitués du premier type de fibres étant présents dans une partie interne de ladite texture. Les brides du carter présentent ainsi une relative souplesse en surface permettant d'accommoder les déformations mécaniques qui s'y propagent tout en conservant une certaine raideur en interne conférée par la présence des torons de chaîne constitués du premier type de fibres afin de présenter un caractère structural suffisant.

Selon une autre caractéristique particulière de la texture fibreuse de l'invention, les première et cinquième portions comprennent entre 10% et 90% de torons de chaîne constitués du deuxième type de fibres, le reste des torons de chaînes étant constitués du premier type de fibres.

Selon une autre caractéristique particulière de la texture fibreuse de l'invention, dans la deuxième portion de la texture fibreuse, la quantité de torons de chaîne constitués du premier et du deuxième type de fibres diminue progressivement entre la première portion et la troisième portion, et dans laquelle, dans la quatrième portion, la quantité de torons de chaîne constitués du premier et du deuxième types de fibres diminue progressivement entre la cinquième portion et la troisième portion. Cela permet d'augmenter progressivement la raideur de la texture et donc du carter depuis les première et cinquième portions de la texture fibreuse jusqu'à la troisième portion qui présente la raideur la plus importante de par sa géométrie globalement plus épaisse ainsi que sa composition comprenant uniquement des torons de chaîne constitués du troisième type de fibres..

L'invention concerne également une préforme fibreuse de carter aéronautique comprenant un enroulement sur au moins un tour d'une texture fibreuse selon l'invention, la préforme fibreuse comprenant des parties de préforme de brides amont et aval formées respectivement par les première et cinquième portions de la texture fibreuse, des parties de préformes de zones structurales amont et aval formées respectivement par les deuxième et quatrième portions de la texture fibreuse et une partie de préforme de zone de rétention formée par la troisième portion de la texture fibreuse.

L'invention concerne encore un carter de turbine à gaz en un matériau composite, comprenant un renfort fibreux constitué d'une préforme fibreuse selon l'invention, et une matrice densifiant le renfort fibreux. Le carter peut notamment être un carter de soufflante de turbine à gaz.

L'invention concerne encore un moteur aéronautique à turbine à gaz ayant un carter selon l'invention.

L'invention a également pour objet un procédé de fabrication d'une texture fibreuse par tissage tridimensionnel entre une pluralité de couches de torons de chaîne s'étendant dans une direction longitudinale et une pluralité de couches de torons de trame s'étendant dans la direction latérale, la structure fibreuse présentant une forme de bande s'étendant dans la direction longitudinale sur une longueur déterminée entre une partie proximale et une partie distale et dans la direction latérale sur une largeur déterminée entre un premier bord latéral et un deuxième bord latéral,
caractérisé en ce que le procédé comprend le tissage des première à cinquième portions s'étendant chacune sur la longueur déterminée de la texture fibreuse suivant la direction longitudinale et sur une largeur déterminée suivant la direction latérale, la première portion s'étendant suivant la direction latérale à partir du premier bord latéral, la deuxième portion s'étendant suivant la direction latérale à partir de la première portion, la troisième portion s'étendant suivant la direction latérale à partir de la deuxième portion, la quatrième portion s'étendant suivant la direction latérale à partir de la troisième portion, la cinquième portion s'étendant suivant la direction latérale à partir de la quatrième portion et jusqu'au deuxième bord latéral, les première et cinquième portions présentant une largeur suivant la direction latérale supérieure à la largeur des deuxième et quatrième portions et inférieure à la largeur de la troisième portion,
en ce que les première et cinquième portions comprennent chacune des torons de chaîne constitués d'un premier type de fibres correspondant à des fibres de carbone ayant un module d'Young supérieur à 290 GPa et un allongement à rupture compris entre 1,2% et 2% et des torons de chaîne constitués d'un deuxième type de fibres ayant un module d'Young compris entre 150 GPa et 250 GPa et un allongement à rupture compris entre 4% et 6%,
et en ce que les deuxième et quatrième portions comprennent chacune des torons de chaîne constitués du premier type de fibres, des torons de chaîne constitués du deuxième type de fibres, et des torons de chaîne constitués d'un troisième type de fibres correspondant à des fibres de carbone ayant un module d'Young supérieur à 250 GPa et un allongement à rupture compris entre 1,5% et 2,5%, la troisième portion comprenant des torons de chaîne constitués du troisième type de fibres.

### Brève description des dessins

[Fig. 1] La figure 1 est une vue schématique en perspective d'un métier à tisser montrant le tissage tridimensionnel d'une texture fibreuse,
[Fig. 2] La figure 2 est une vue schématique en perspective d'une texture fibreuse conformément à un mode de réalisation de l'invention,
[Fig. 3] La figure 3 est une coupe latérale de la texture fibreuse de la figure 2 et montrant un plan d'armure de tissage,
[Fig. 4] La figure 4 une vue schématique en perspective montrant l'enroulement d'une texture fibreuse sur un outillage de mise en forme,
[Fig. 5] La figure 5 est une demi-vue en coupe axiale d'une préforme de carter obtenue par enroulement d'une texture fibreuse comme montré sur la figure 4,
[Fig. 6] La figure 6 est une vue en coupe montrant le positionnement de secteurs d'injection sur la préforme du carter de la figure 5,
[Fig. 7] La figure 7 est une vue en perspective d'un moteur aéronautique conformément à un mode de réalisation de l'invention.
[Fig. 8] La figure 8 est une demi-vue en coupe axiale d'un carter de soufflante de moteur aéronautique selon l'art antérieur.

### Description des modes de réalisation

L'invention s'applique d'une manière générale à des textures fibreuses destinées à la fabrication de carters en matériau composite, ces carters comportant une zone ou un bouclier de rétention avec des brides annulaires à leurs extrémités.

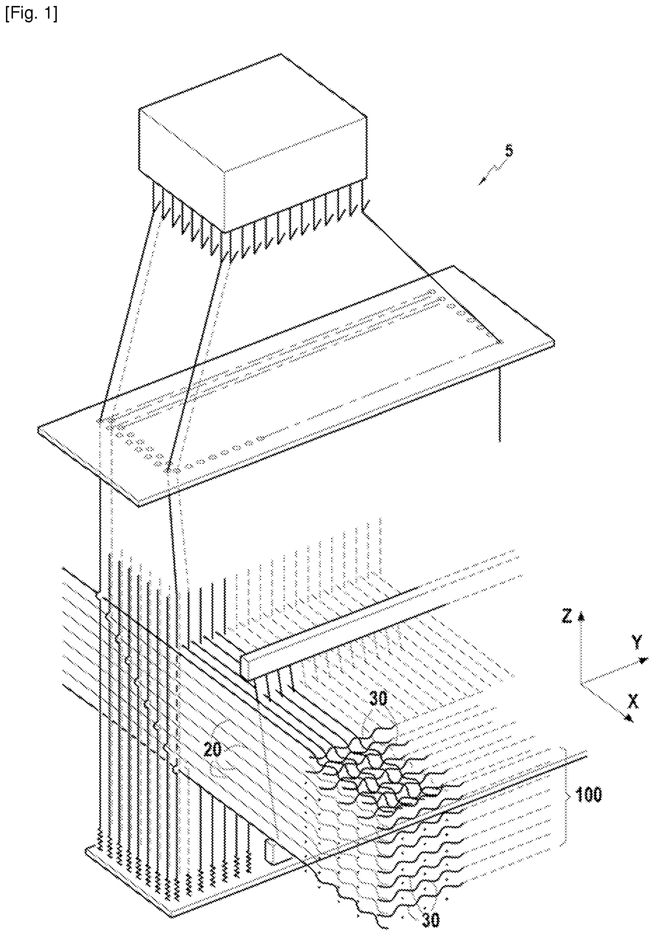

Comme représentée sur la figure 1, une texture fibreuse 100 est réalisée de façon connue par tissage au moyen d'un métier à tisser de type jacquard 5 sur lequel on a disposé un faisceau de fils de chaîne ou torons 20 en une pluralité de couches, les fils de chaîne étant liés par des fils ou torons de trame 30.

La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables.

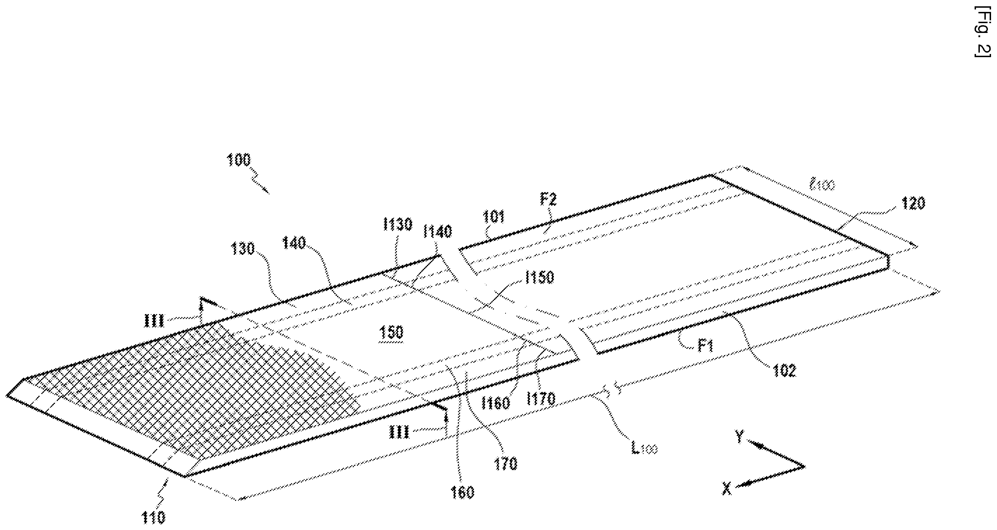

Comme illustrée sur la figure 2, la texture fibreuse 100 présente une forme de bande qui s'étend en longueur dans une direction longitudinale X correspondant à la direction de défilement des fils ou torons de chaîne 20 et en largeur ou transversalement dans une direction latérale Y entre un premier et un deuxième bords latéraux 101 et 102, la direction latérale Y correspondant à la direction des fils ou torons de trame 30. La texture fibreuse s'étend longitudinalement sur une longueur déterminée L₁₀₀ dans la direction X entre une partie proximale 110 destinée à former le début de l'enroulement d'une préforme fibreuse sur un outillage de mise en forme et une partie distale 120 destinée à former la fin de l'enroulement de la préforme fibreuse.

La longueur L₁₀₀ de la texture fibreuse 100 est déterminée en fonction de la circonférence de l'outillage ou du moule de mise en forme de manière à permettre la réalisation d'un nombre de tours déterminé de la texture fibreuse, par exemple quatre tours.

La texture fibreuse présente en outre d'amont en aval (de gauche à droite sur la figure 2) des première à cinquième portions 130, 140, 150, 160, 170 s'étendant chacune sur la longueur L₁₀₀ de la texture fibreuse. La première portion 130 s'étend suivant la direction latérale Y sur une largeur déterminée l₁₃₀ à partir du premier bord latéral 101. La première portion 130 est destinée à former la bride annulaire amont du carter. La deuxième portion 140 s'étend suivant la direction latérale Y sur une largeur déterminée l₁₄₀ à partir de la première portion 130. La deuxième portion 140 est destinée à former une partie de la zone structurale amont du carter. La troisième portion 150 s'étend suivant la direction latérale Y sur une largeur déterminée l₁₅₀ à partir de la deuxième portion 140. La troisième portion 150 est destinée à former la zone structurale centrale et la zone ou le bouclier de rétention du carter. La quatrième portion 160 s'étend suivant la direction latérale Y sur une largeur déterminée l₁₆₀ à partir de la troisième portion 150. La quatrième portion 160 est destinée à former une partie de la zone structurale aval du carter. La cinquième portion 170 s'étend suivant la direction latérale Y sur une largeur déterminée l₁₇₀ à partir de la quatrième portion 160 et jusqu'au deuxième bord latéral 102. La cinquième portion 170 est destinée à former la bride annulaire aval du carter.

Les première et cinquième portions 130 et 170 présentent des largeurs l₁₃₀ et l₁₄₀ similaires qui sont supérieures aux largeurs l₁₄₀ et l₁₆₀ des deuxième et quatrième portions 140 et 160 et inférieures à la largeur l₁₅₀ de la troisième portion 150.

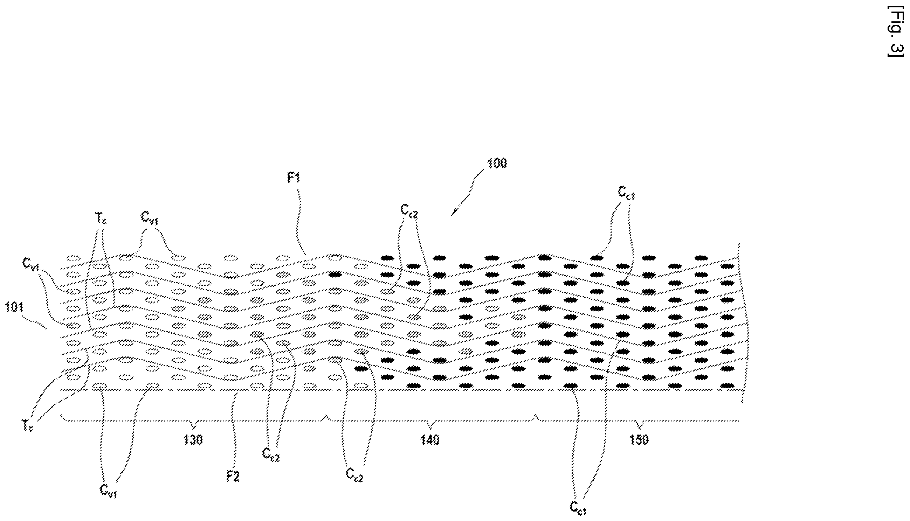

La figure 3 illustre un plan de l'armure de tissage interlock de la texture fibreuse 100 situé au niveau des première, deuxième et troisième portions 130, 140 et 150.

Conformément à l'invention, la première portion 130 comprend des torons de chaîne constitués par des types de fibres différents. Plus précisément, la première portion 130 comprend des torons de chaîne C_{C2} constitués d'un premier type de fibres correspondant à des fibres de carbone ayant un module d'Young supérieur à 290 GPa et un allongement à rupture compris entre 1,2% et 2% et des torons de chaîne C_{V1} constitués d'un deuxième type de fibres ayant un module d'Young (E) compris entre 150 GPa et 250 GPa et un allongement à rupture (A) compris entre 4% et 6%. Dans l'exemple décrit ici, les torons de chaîne C_{V1} sont constitués de fibres de verre, les fibres de verre pouvant être remplacées par exemple par des fibres Zylon^{®} AS et p-Aramide(HM). Par exemple, on peut choisir le premier type de fibres comme étant des fibres de carbone du type Tenax^{™} UMS40 (E = 390 GPa et A = 1.2%) commercialisées par la société TEIJIN et le deuxième type de fibre comme étant des fibres de verre du type E-GLASS (E = 165 GPa et A = 4.4%) commercialisées par la société AGY HOLDING CORP.

Comme on peut le voir sur la figure 3, les torons de chaîne C_{V1} constitués du deuxième type de fibre présents dans la première portion 130 sont de préférence répartis de façon à ce que les torons C_{V1} soient présents au niveau des faces inférieure et supérieure F1 et F2 de la texture fibreuse 100 et au niveau du premier bord latéral 101 de la texture 100 qui sont destinés à former respectivement les faces radialement interne et externe ainsi que l'extrémité de la partie de préforme de bride amont. Les torons de chaîne C_{C2} constitués du premier type de fibres sont de préférence présents dans une partie interne de ladite texture. La première portion 130 comprend des torons de trame T_{C} tous constitués de fibres d'un troisième type de fibres correspondant à des fibres de carbone ayant un module d'Young supérieur à 250 GPa et un allongement à rupture compris entre 1,5% et 2,5%. Par exemple, on peut choisir le troisième type de fibres comme étant des fibres de carbone du type HexTow^{®} IM7 (E = 276 GPa et A = 1.8%) commercialisées par la société HEXCEL.

De même, la cinquième portion 170 (non représentée sur la figure 3) comprend des torons de chaîne C_{V1} constitués du deuxième type de fibres et des torons de chaîne C_{C2} constitués du premier type de fibres. Les torons de chaîne C_{V1} constitués du deuxième type de fibre présents dans la cinquième portion 170 sont de préférence répartis de façon à ce que les torons C_{V1} soient présents au niveau des faces inférieure et supérieure F1 et F2 de la texture fibreuse 100 et au niveau du deuxième bord latéral 102 de la texture 100 qui sont destinés à former respectivement les faces radialement interne et externe ainsi que l'extrémité de la partie de préforme de bride aval. Les torons de chaîne C_{C2} constitués du premier type de fibres sont de préférence présents dans une partie interne de ladite texture. La cinquième portion 170 comprend des torons de trame T_{C} tous constitués de fibres du troisième type de fibres.

Les première et cinquième portions 130 et 170 comprennent entre 10% et 90% de torons de chaîne C_{V1} constitués du deuxième type de fibres, les torons de chaînes restants dans ces portions étant constitués du premier type de fibres, soit entre 10% et 90% de torons de chaîne C_{C2}.

La deuxième portion 140 comprend également des torons de chaîne constitués par des types de fibres différents. Plus précisément, la deuxième portion 140 comprend des torons de chaîne C_{C2} constitués du premier type de fibres défini ci-avant, des torons de chaîne C_{V1} constitués du deuxième type de fibres défini ci-avant et des torons de chaîne C_{C1} constitués du troisième type de fibres correspondant à des fibres de carbone ayant un module d'Young supérieur à 250 GPa et un allongement à rupture compris entre 1,5% et 2,5%.

Les torons de chaîne C_{V1} constitués du deuxième type de fibre présents dans la deuxième portion 140 sont de préférence répartis de façon à ce que les torons C_{V1} soient présents au niveau des faces inférieure et supérieure F1 et F2 de la texture fibreuse 100.

La quantité de torons de chaîne C_{V1} et C_{C2} respectivement constitués du premier et du deuxième type de fibres diminue progressivement entre la première portion 130 et la troisième portion 150 pour être progressivement remplacés par des torons de chaîne C_{C1} constitués du troisième type de fibres. Cela permet d'augmenter progressivement la raideur de la texture et donc du carter depuis la première portion 130 de la texture fibreuse 100 jusqu'à la troisième portion 150 qui présente la raideur la plus importante de par sa géométrie globalement plus épaisse ainsi que sa composition comprenant uniquement des torons de chaîne C_{C1} constitués du troisième type de fibres.

La deuxième portion 140 comprend des torons de trame T_{C} tous constitués de fibres du troisième type de fibres.

De même, la quatrième portion 160 (non représentée sur la figure 3) comprend des torons de chaîne C_{C2} constitués du premier type de fibres, des torons de chaîne C_{V1} constitués du deuxième type de fibres et des torons de chaîne C_{C1} constitués du troisième type de fibres. Les torons de chaîne C_{V1} constitués du deuxième type de fibres présents dans la quatrième portion 160 sont de préférence répartis de façon à ce que les torons C_{V1} soient présents au niveau des faces inférieure et supérieure F1 et F2 de la texture fibreuse 100. La quantité de torons de chaîne C_{V1} et C_{C2} respectivement constitués du premier et du deuxième type de fibres diminue progressivement entre la cinquième portion 170 et la troisième portion 150 pour être progressivement remplacés par des torons de chaîne C_{C1} constitués du troisième type de fibres. Cela permet d'augmenter progressivement la raideur de la texture et donc du carter depuis la cinquième portion 170 de la texture fibreuse 100 jusqu'à la troisième portion 150 qui présente la raideur la plus importante de par sa géométrie globalement plus épaisse ainsi que sa composition comprenant uniquement des torons de chaîne C_{C1} constitués du troisième type de fibres. La quatrième portion 160 comprend des torons de trame T_{C} tous constitués de fibres du troisième type de fibres.

Il y a donc une évolution de la nature des fils ou torons de chaîne lorsque l'on se déplace le long de la direction latérale Y de la texture fibreuse 100.

Les torons de chaîne C_{V1} constitués du deuxième type de fibres sont majoritairement présents dans les première et cinquième portions 130 et 170 de la texture fibreuse 100 destinées à former les brides amont et aval du carter tandis que les torons de chaînes C_{C2} constitués du premier type de fibres de carbone et les torons de chaîne constitués du troisième type de fibres de carbone sont majoritairement présents dans les deuxième, troisième et quatrième portions 140, 150 et 160 de la texture fibreuse 100 destinées à former les zones structurales et la zone de rétention du carter. La texture fibreuse 100 de l'invention permet après mise en forme de former un renfort fibreux de carter dans lequel les parties formant les brides amont et aval comprennent des fibres (deuxième type de fibres) présentant une raideur (module d'Young) inférieure à celles des autres fibres (premier et deuxième type de fibres) du renfort mais un allongement à rupture supérieur. Les brides du carter en matériau composite comprenant un tel renfort fibreux sont plus aptes à supporter sans détérioration les déformations mécaniques imposées par l'onde de choc propagée après un impact sur la zone de rétention. Les autres parties du renfort fibreux destinées à former les zones structurales amont et aval et la zone de rétention présentent une raideur plus importante par la présence majoritaire de fibres de carbone (premier et deuxième types de fibres) ayant un module d'Young supérieur à celui des fibres du deuxième type de fibres.

Selon une caractéristique particulière de la texture de l'invention, les torons de chaîne C_{V1} constitués du deuxième type de fibres sont de préférence répartis dans les première et cinquième portion 130 et 170 de la texture 100 de façon à ce que les torons C_{V1} soient présents au niveau des faces radialement interne et externe ainsi qu'au niveau de l'extrémité du renfort fibreux des brides amont et aval. Les brides présentent ainsi une relative souplesse en surface permettant d'accommoder les déformations mécaniques qui s'y propagent tout en conservant une certaine raideur en interne conférée par la présence des torons de chaîne C_{C2} constitués du premier type de fibres afin de présenter un caractère structural suffisant.

On vient de décrire un exemple dans lequel la texture fibreuse a une armure de tissage interlock à 8 couches de chaine et 7 couches de trame. On ne sort toutefois pas du cadre de l'invention lorsque le nombre de couches de trame et de chaine est différent, ou lorsque la texture fibreuse présente une armure de tissage différente d'une armure interlock.

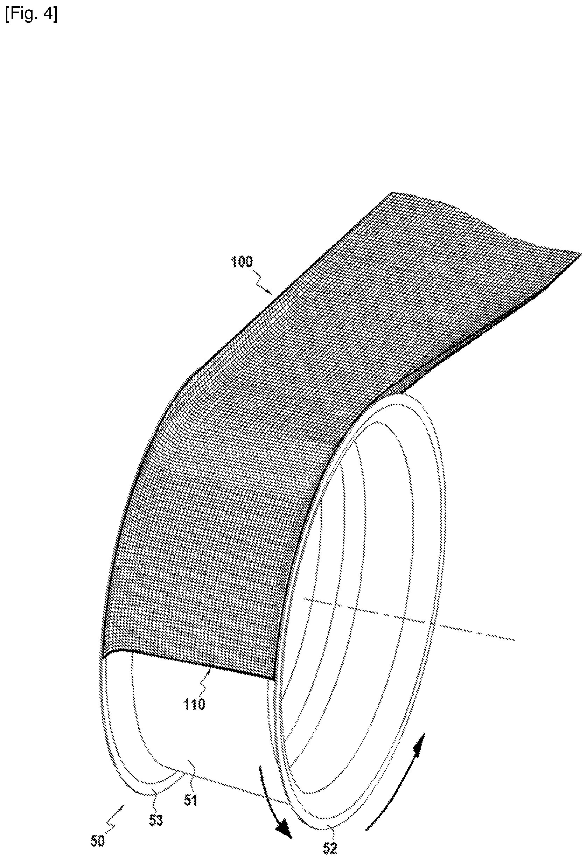

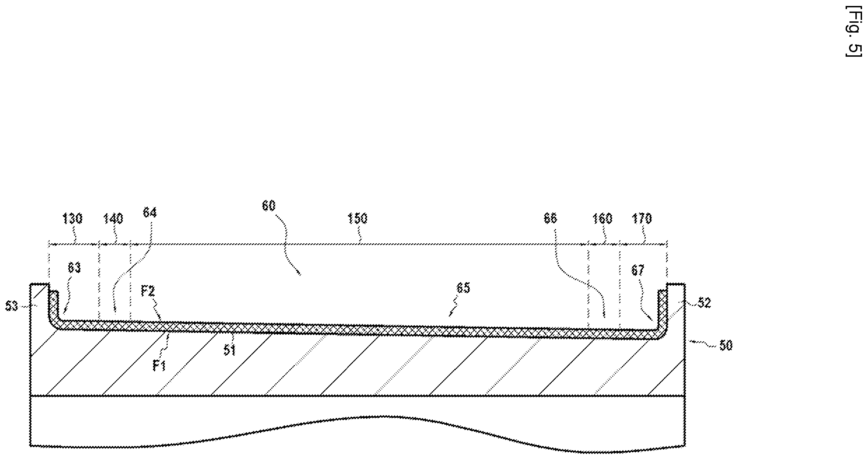

Comme illustré sur la figure 4, une préforme fibreuse 60 destinée à constituer le renfort fibreux du carter est formée par enroulement sur un mandrin 50 de la texture fibreuse 100 décrite précédemment, le renfort fibreux constituant une préforme fibreuse tubulaire complète d'un carter formant une seule pièce. A cet effet, le mandrin 50 présente une surface externe 51 dont le profil correspond à la surface interne du carter à réaliser. Le mandrin 50 comporte également deux flasques 52 et 53 pour former des parties de préforme de brides amont et aval 63 et 67 correspondant aux brides du carter comme illustré sur la figure 5. Les parties de préforme de brides amont et aval 63 et 67 sont formées respectivement par les première et cinquième portions 130 et 170 de la texture fibreuse 100. La préforme fibreuse 60 comprend en outre des parties de préformes de zones structurales amont et aval 64, 66 (figure 5) correspondant aux zones structurales amont et aval du carter. Les parties de préformes de zones structurales amont et aval 64, 66 sont formées respectivement par les deuxième et quatrième portions 140 et 160 de la texture fibreuse. La préforme fibreuse 60 comprend encore une partie de préforme de zone de rétention 65 destinée à former la zone ou le bouclier de rétention du carter. La partie de préforme de zone de rétention 65 est formée par la troisième portion 150 de la texture fibreuse.

La figure 5 montre une vue en coupe de la préforme fibreuse 60 obtenue après enroulement de la texture fibreuse 100 sur au moins un tour autour du mandrin 50. Dans l'exemple décrit ici, la préforme 60 comprend 4 tours d'enroulement de la texture fibreuse 100.

On procède ensuite à la densification de la préforme fibreuse 60 par une matrice.

La densification de la préforme fibreuse consiste à combler la porosité de la préforme, dans tout ou partie du volume de celle-ci, par le matériau constitutif de la matrice.

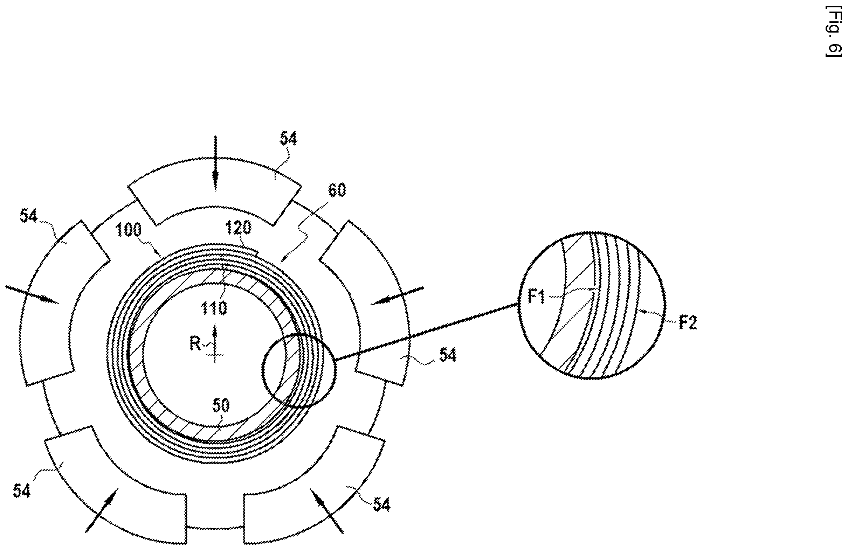

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 6, la préforme fibreuse 60 est ici placée entre une pluralité de secteurs 54 formant contre-moule et le mandrin 50 formant support, ces éléments présentant respectivement la forme extérieure et la forme intérieure du carter à réaliser. Ensuite, on injecte le précurseur liquide de matrice, par exemple une résine, dans tout le logement pour imprégner la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

La densification de la préforme fibreuse peut être réalisée par le procédé bien connu de moulage par transfert dit RTM (« Resin Transfer Molding »). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

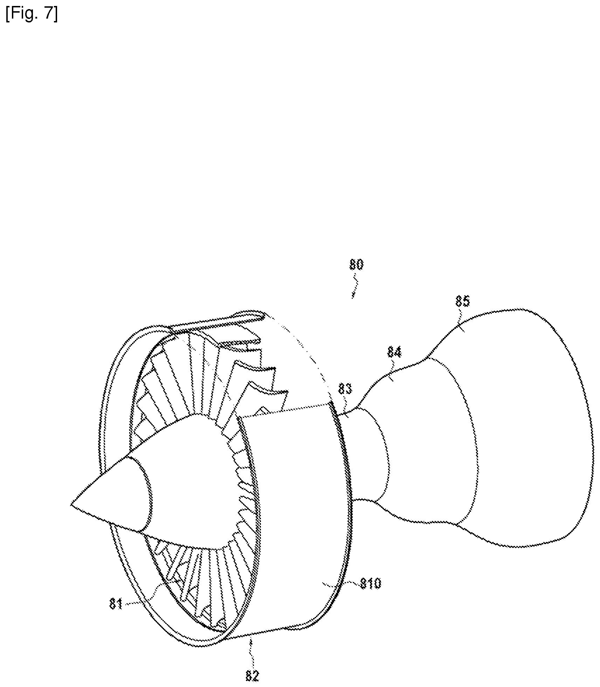

Après l'injection et la polymérisation, la pièce est démoulée. La pièce est finalement détourée pour enlever l'excès de résine et les chanfreins sont usinés pour obtenir un carter 810 présentant une forme de révolution comme illustré sur la figure 7.

Le carter 810 représenté sur la figure 7 est un carter d'une soufflante de moteur aéronautique à turbine à gaz 80. Un tel moteur, comme montré très schématiquement par la figure 7 comprend, de l'amont vers l'aval dans le sens de l'écoulement de flux gazeux, une soufflante 81 disposée en entrée du moteur, un compresseur 82, une chambre de combustion 83, une turbine haute-pression 84 et une turbine basse pression 85. Le moteur est logé à l'intérieur d'un carter comprenant plusieurs parties correspondant à différents éléments du moteur. Ainsi, la soufflante 81 est entourée par le carter 810.

## Revendications

1. Texture fibreuse (100) présentant une forme de bande s'étendant dans une direction longitudinale (X) sur une longueur déterminée (L₁₀₀) entre une partie proximale (110) et une partie distale (120) et dans une direction latérale (Y) sur une largeur déterminée (l₁₀₀) entre un premier bord latéral (101) et un deuxième bord latéral (102), la texture fibreuse présentant un tissage tridimensionnel entre une pluralité de couches de torons de chaîne (20, 40) s'étendant dans la direction longitudinale et une pluralité de couches de torons de trame (30) s'étendant dans la direction latérale,
**caractérisée en ce que** la texture fibreuse (100) comprend des première à cinquième portions (130, 140, 150, 160, 170) s'étendant chacune sur la longueur déterminée de la texture fibreuse suivant la direction longitudinale (X) et sur une largeur déterminée suivant la direction latérale (Y), la première portion (130) s'étendant suivant la direction latérale à partir du premier bord latéral (101), la deuxième portion (140) s'étendant suivant la direction latérale à partir de la première portion, la troisième portion (150) s'étendant suivant la direction latérale à partir de la deuxième portion, la quatrième portion (160) s'étendant suivant la direction latérale à partir de la troisième portion, la cinquième portion (170) s'étendant suivant la direction latérale à partir de la quatrième portion et jusqu'au deuxième bord latéral (102), les première et cinquième portions (130, 170) présentant une largeur suivant la direction latérale supérieure à la largeur des deuxième et quatrième portions (140, 160) et inférieure à la largeur de la troisième portion (150),
**en ce que** les première et cinquième portions (130, 170) comprennent chacune des torons de chaîne constitués d'un premier type de fibres correspondant à des fibres de carbone ayant un module d'Young supérieur à 290 GPa et un allongement à rupture compris entre 1,2% et 2% et des torons de chaîne constitués d'un deuxième type de fibres ayant un module d'Young compris entre 150 GPa et 250 GPa et un allongement à rupture compris entre 4% et 6%,
et **en ce que** les deuxième et quatrième portions (140, 160) comprennent chacune des torons de chaîne constitués du premier type de fibres, des torons de chaîne constitués du deuxième type de fibres, et des torons de chaîne constitués d'un troisième type de fibres correspondant à des fibres de carbone ayant un module d'Young supérieur à 250 GPa et un allongement à rupture compris entre 1,5% et 2,5%, la troisième portion (150) comprenant des torons de chaîne constitués du troisième type de fibres.

2. Texture fibreuse selon la revendication 1, dans laquelle, dans les première et cinquième portions, les torons de chaîne constitués du deuxième type de fibres sont présents au niveau des faces inférieure et supérieure de la texture et au niveau des premier et deuxième bords latéraux de ladite texture, les torons de chaîne constitués du premier type de fibres étant présents dans une partie interne de ladite texture.

3. Texture fibreuse selon la revendication 1 ou 2, dans laquelle, les première et cinquième portions comprennent entre 10% et 90% de torons de chaîne constitués du deuxième type de fibres, le reste des torons de chaînes étant constitués du premier type de fibres.

4. Texture selon l'une quelconque des revendications 1 à 3, dans laquelle, dans la deuxième portion, la quantité de torons de chaîne constitués du premier et du deuxième types de fibres diminue progressivement entre la première portion et la troisième portion, et dans laquelle, dans la quatrième portion, la quantité de torons de chaîne constitués du premier et du deuxième types de fibres diminue progressivement entre la cinquième portion et la troisième portion.

5. Préforme fibreuse (60) de carter aéronautique (810) comprenant un enroulement sur au moins un tour d'une texture fibreuse (100) selon l'une quelconque des revendications 1 à 4, la préforme fibreuse comprenant des parties de préforme de brides amont et aval (63, 67) formées respectivement par les première et cinquième portions (130, 170) de la texture fibreuse (100), des parties de préformes de zones structurales amont et aval (64, 66) formées respectivement par les deuxième et quatrième portions (140, 160) de la texture fibreuse et une partie de préforme de zone de rétention (65) formée par la troisième portion (150) de la texture fibreuse.

6. Carter (810) de turbine à gaz en un matériau composite, comprenant un renfort fibreux constitué d'une préforme fibreuse (60) selon la revendication 5, et une matrice densifiant le renfort fibreux.

7. Carter (810) selon la revendication 6, dans lequel ledit carter est un carter de soufflante de turbine à gaz.

8. Moteur aéronautique à turbine à gaz (80) ayant un carter (810) selon la revendication 6 ou 7.

9. Procédé de fabrication d'une texture fibreuse (100) par tissage tridimensionnel entre une pluralité de couches de torons de chaîne (20, 40) s'étendant dans une direction longitudinale (X) et une pluralité de couches de torons de trame (30) s'étendant dans la direction latérale (Y), la structure fibreuse présentant une forme de bande s'étendant dans la direction longitudinale (X) sur une longueur déterminée (L₁₀₀) entre une partie proximale (110) et une partie distale (120) et dans la direction latérale (Y) sur une largeur déterminée (l₁₀₀) entre un premier bord latéral (101) et un deuxième bord latéral (102),
**caractérisé en ce que** le procédé comprend le tissage des première à cinquième portions (130, 140, 150, 160, 170) s'étendant chacune sur la longueur déterminée de la texture fibreuse suivant la direction longitudinale (X) et sur une largeur déterminée suivant la direction latérale (Y), la première portion (130) s'étendant suivant la direction latérale à partir du premier bord latéral (101), la deuxième portion (140) s'étendant suivant la direction latérale à partir de la première portion, la troisième portion (150) s'étendant suivant la direction latérale à partir de la deuxième portion, la quatrième portion (160) s'étendant suivant la direction latérale à partir de la troisième portion, la cinquième portion (170) s'étendant suivant la direction latérale à partir de la quatrième portion et jusqu'au deuxième bord latéral (102), les première et cinquième portions (130, 170) présentant une largeur suivant la direction latérale supérieure à la largeur des deuxième et quatrième portions (140, 160) et inférieure à la largeur de la troisième portion (150),
**en ce que** les première et cinquième portions (130, 170) comprennent chacune des torons de chaîne constitués d'un premier type de fibres correspondant à des fibres de carbone ayant un module d'Young supérieur à 290 GPa et un allongement à rupture compris entre 1,2% et 2% et des torons de chaîne constitués d'un deuxième type de fibres ayant un module d'Young compris entre 150 GPa et 250 GPa et un allongement à rupture compris entre 4% et 6%,
et **en ce que** les deuxième et quatrième portions (140, 160) comprennent chacune des torons de chaîne constitués du premier type de fibres, des torons de chaîne constitués du deuxième type de fibres, et des torons de chaîne constitués d'un troisième type de fibres correspondant à des fibres de carbone ayant un module d'Young supérieur à 250 GPa et un allongement à rupture compris entre 1,5% et 2,5%, la troisième portion (150) comprenant des torons de chaîne constitués du troisième type de fibres.

## Patentansprüche

1. Fasertextur (100), die eine Streifenform aufweist, die sich in einer Längsrichtung (X) über eine bestimmte Länge (L₁₀₀) zwischen einem proximalen Teil (110) und einem distalen Teil (120) und in einer seitlichen Richtung (Y) über eine bestimmte Breite (I₁₀₀) zwischen einem ersten Seitenrand (101) und einem zweiten Seitenrand (102) erstreckt, wobei die Fasertextur eine dreidimensionale Verwebung zwischen mehreren Schichten von Kettlitzen (20, 40), die sich in der Längsrichtung erstrecken, und mehreren Schichten von Schusslitzen (30) aufweisen, die sich in der seitlichen Richtung erstrecken,
**dadurch gekennzeichnet, dass** die Fasertextur (100) erste bis fünfte Abschnitte (130, 140, 150, 160, 170) umfasst, die sich jeweils über die bestimmte Länge der Fasertextur der Längsrichtung (X) folgend und über eine bestimmte Breite der seitlichen Richtung (Y) folgend erstrecken, wobei der erste Abschnitt sich der seitlichen Richtung folgend ausgehend von dem ersten Seitenrand (101) erstreckt, der zweite Abschnitt (140) sich der seitlichen Richtung folgend ausgehend von dem ersten Abschnitt erstreckt, der dritte Abschnitt (150) sich der seitlichen Richtung folgend ausgehend von dem zweiten Abschnitt erstreckt, der vierte Abschnitt (160) sich der seitlichen Richtung folgend ausgehend von dem dritten Abschnitt erstreckt, der fünfte Abschnitt (170) sich der seitlichen Richtung folgend ausgehend von dem vierten Abschnitt und bis zu dem zweiten Seitenrand (102) erstreckt, wobei der erste und der fünfte Abschnitt (130, 170) der seitlichen Richtung folgend eine Breite aufweisen, die größer ist als die Breite des zweiten und vierten Abschnitts (140, 160) und geringer als die Breite des dritten Abschnitts (150),
dass der erste und der fünfte Abschnitt (130, 170) jeweils Kettlitzen umfassen, die aus einem ersten Typ von Fasern gebildet sind, der Kohlenstofffasern entspricht, die einen Elastizitätsmodul von mehr als 290 GPa und eine Bruchdehnung zwischen 1,2 % und 2 % aufweisen, und Kettlitzen, die aus einem zweiten Typ von Fasern gebildet sind, die einen Elastizitätsmodul zwischen 150 GPa und 250 GPa und eine Bruchdehnung zwischen 4 % und 6 % aufweisen,
und dass der zweite und der vierte Abschnitt (140, 160) jeweils Kettlitzen umfassen, die aus dem ersten Typ von Fasern gebildet sind, Kettlitzen, die aus dem zweiten Typ von Fasern gebildet sind, und Kettlitzen, die aus einem dritten Typ von Fasern gebildet sind, der Kohlenstofffasern entspricht, die einen Elastizitätsmodul von mehr als 250 GPa und eine Bruchdehnung zwischen 1,5 % und 2,5 % aufweisen, wobei der dritte Abschnitt (150) Kettlitzen umfasst, die aus dem dritten Typ von Fasern gebildet sind.

2. Fasertextur nach Anspruch 1, wobei in dem ersten und fünften Abschnitt die Kettlitzen, die aus dem zweiten Typ von Fasern gebildet sind, an den unteren und oberen Seitenflächen der Textur und an den ersten und zweiten Seitenrändern der Textur vorliegen, wobei die Kettlitzen, die aus dem ersten Typ von Fasern gebildet sind, in einem inneren Teil der Textur vorliegen.

3. Fasertextur nach Anspruch 1 oder 2, wobei der erste und fünfte Abschnitt zwischen 10 % und 90 % der Kettlitzen umfassen, die aus dem zweiten Typ von Fasern bestehen, wobei der Rest der Kettlitzen aus dem ersten Typ von Fasern besteht.

4. Textur nach einem der Ansprüche 1 bis 3, wobei in dem zweiten Abschnitt die Menge der Kettlitzen, die aus dem ersten und dem zweiten Typ von Fasern gebildet sind, zwischen dem ersten Abschnitt und dem dritten Abschnitt progressiv abnimmt, und wobei in dem vierten Abschnitt die Menge der Kettlitzen, die aus dem ersten und dem zweiten Typ von Fasern gebildet sind, zwischen dem fünften Abschnitt und dem dritten Abschnitt progressiv abnimmt.

5. Faservorform (60) eines Luftfahrzeug-Gehäuses (810), umfassend eine Wickelstruktur mit zumindest einer Wicklung einer Fasertextur (100) nach einem der Ansprüche 1 bis 4, wobei die Faservorform Vorformteile für einen stromaufwärtigen und stromabwärtigen Flansch (63, 67), die jeweils durch den ersten und fünften Abschnitt (130, 170) der Fasertextur (100) gebildet werden, Vorformteile für eine stromaufwärtige und stromabwärtige Strukturzone (64, 66), die jeweils durch den zweiten und vierten Abschnitt (140, 160) der Fasertextur gebildet werden, und einen Vorformteil für eine Haltezone (65) umfasst, die durch den dritten Abschnitt (150) der Fasertextur gebildet wird.

6. Gehäuse (810) einer Gasturbine aus einem Verbundmaterial, das eine Faserverstärkung, die aus einer Faservorform (60) nach Anspruch 5 gebildet wird, und eine Matrix umfasst, welche die Faserverstärkung verdichtet.

7. Gehäuse (810) nach Anspruch 6, wobei das Gehäuse ein Gebläsegehäuse einer Gasturbine ist.

8. Gasturbinen-Luftfahrzeugmotor (80), der ein Gehäuse (810) nach Anspruch 6 oder 7 aufweist.

9. Verfahren zur Herstellung einer Fasertextur (100) durch dreidimensionale Verwebung zwischen mehreren Schichten von Kettlitzen (20, 40), die sich in einer Längsrichtung (X) erstrecken, und mehreren Schichten von Schusslitzen (30), die sich in der seitlichen Richtung (Y) erstrecken, wobei die Fasertextur eine Streifenform aufweist, die sich in der Längsrichtung (X) über eine bestimmte Länge (L₁₀₀) zwischen einem proximalen Teil (110) und einem distalen Teil (120) und in der seitlichen Richtung (Y) über eine bestimmte Breite (I₁₀₀) zwischen einem ersten Seitenrand (101) und einem zweiten Seitenrand (102) erstreckt,
**dadurch gekennzeichnet, dass** das Verfahren die Verwebung von ersten bis fünften Abschnitten (130, 140, 150, 160, 170) umfasst, die sich jeweils über die bestimmte Länge der Fasertextur der Längsrichtung (X) folgend und über eine bestimmte Breite der seitlichen Richtung (Y) folgend erstrecken, wobei der erste Abschnitt sich der seitlichen Richtung folgend ausgehend von dem ersten Seitenrand (101) erstreckt, der zweite Abschnitt (140) sich der seitlichen Richtung folgend ausgehend von dem ersten Abschnitt erstreckt, der dritte Abschnitt (150) sich der seitlichen Richtung folgend ausgehend von dem zweiten Abschnitt erstreckt, der vierte Abschnitt (160) sich der seitlichen Richtung folgend ausgehend von dem dritten Abschnitt erstreckt, der fünfte Abschnitt (170) sich der seitlichen Richtung folgend ausgehend von dem vierten Abschnitt und bis zu dem zweiten Seitenrand (102) erstreckt, wobei der erste und der fünfte Abschnitt (130, 170) der seitlichen Richtung folgend eine Breite aufweisen, die größer ist als die Breite des zweiten und vierten Abschnitts (140, 160) und geringer als die Breite des dritten Abschnitts (150),
dass der erste und der fünfte Abschnitt (130, 170) jeweils Kettlitzen umfassen, die aus einem ersten Typ von Fasern gebildet sind, der Kohlenstofffasern entspricht, die einen Elastizitätsmodul von mehr als 290 GPa und eine Bruchdehnung zwischen 1,2 % und 2 % aufweisen, und Kettlitzen, die aus einem zweiten Typ von Fasern gebildet sind, die einen Elastizitätsmodul zwischen 150 GPa und 250 GPa und eine Bruchdehnung zwischen 4 % und 6 % aufweisen,
und dass der zweite und der vierte Abschnitt (140, 160) jeweils Kettlitzen umfassen, die aus dem ersten Typ von Fasern gebildet sind, Kettlitzen, die aus dem zweiten Typ von Fasern gebildet sind, und Kettlitzen, die aus einem dritten Typ von Fasern gebildet sind, der Kohlenstofffasern entspricht, die einen Elastizitätsmodul von mehr als 250 GPa und eine Bruchdehnung zwischen 1,5 % und 2,5 % aufweisen, wobei der dritte Abschnitt (150) Kettlitzen umfasst, die aus dem dritten Typ von Fasern gebildet sind.

## Claims

1. A fibrous texture (100) having a strip shape extending in a longitudinal direction (X) over a determined length (L₁₀₀) between a proximal portion (110) and a distal portion (120) and in a lateral direction (Y) over a determined width (l₁₀₆) between a first lateral edge (101) and a second lateral edge (102), the fibrous texture having a three-dimensional weave between a plurality of layers of warp strands (20, 40) extending in the longitudinal direction and a plurality of layers of weft strands (30) extending in the lateral direction, **characterized in that** the fibrous texture (100) comprises first to fifth portions (130, 140, 150, 160, 170), each extending over the determined length of the fibrous texture in the longitudinal direction (X) and over a determined width in the lateral direction (Y), the first portion extending (130) in the lateral direction from the first lateral edge (101), the second portion (140) extending in the lateral direction from the first portion, the third portion (150) extending in the lateral direction from the second portion, the fourth portion (160) extending in the lateral direction from the third portion, the fifth portion (170) extending in the lateral direction from the fourth portion to the second lateral edge (102), the first and fifth portions (130, 170) having a width in the lateral direction greater than the width of the second and fourth portions (140, 160) and less than the width of the third portion (150), **in that** the first and fifth portions (130, 170) each comprise warp strands composed of a first type of fiber corresponding to carbon fibers having a Young's modulus greater than 290 GPa and an elongation at break comprised between 1.2% and 2% and warp strands composed of a second type of fiber having a Young's modulus comprised between 150 GPa and 250 GPa and an elongation at break comprised between 4% and 6%, and **in that** the second and fourth portions (140, 160) each comprise warp strands composed of the first type of fiber, warp strands composed of the second type of fiber, and warp strands composed of a third type of fiber corresponding to carbon fibers having a Young's modulus greater than 250 GPa and an elongation at break comprised between 1.5% and 2.5%, the third portion (150) comprising warp strands composed of the third type of fibers.

2. The fibrous texture according to claim 1, wherein, in the first and fifth portions, the warp strands composed of the second type of fibers are present at the lower and upper faces of the texture and at the first and second lateral edges of said texture, the warp strands composed of the first type of fibers being present in an internal part of said texture.

3. The fibrous texture according to claim 1 or 2, wherein the first and fifth portions comprise between 10% and 90% of warp strands composed of the second type of fibers, the remainder of the warp strands being composed of the first type of fibers.

4. The texture according to any of claims 1 to 3, wherein, in the second portion of the fibrous texture, the quantity of warp strands composed of the first and second types of fibers decreases progressively between the first portion and the third portion, and in which, in the fourth portion, the quantity of warp strands composed of the first and second types of fibers decreases progressively between the fifth portion and the third portion.

5. A fibrous preform (60) of an aeronautical casing (810) comprising a winding of a fibrous texture (100) according to any one of claims 1 to 4 over at least one turn, the fibrous preform comprising upstream and downstream flange preform portions (63, 67) formed respectively by the first and fifth (130, 170) portions of the fibrous texture (100), upstream and downstream structural zone preform portions (64, 66) formed respectively by the second and fourth portions (140, 160) of the fibrous texture, and a preform portion of retention zone (65) formed by the third portion (150) of the fibrous texture.

6. A gas turbine casing (810) made of a composite material, comprising a fibrous reinforcement composed of a fibrous preform (60) according to claim 5, and a matrix densifying the fibrous reinforcement.

7. The casing (810) according to claim 6 wherein said casing is a gas turbine fan casing.

8. A gas turbine aircraft engine (80) having a casing (810) according to claim 6 or 7.

9. A method for manufacturing a fibrous texture (100) by three-dimensional weaving between a plurality of layers of warp strands (20, 40) extending in a longitudinal direction (X) and a plurality of layers of weft strands (30) extending in the lateral direction (Y), the fibrous structure having a strip shape extending in the longitudinal direction (X) over a determined length (L₁₀₀) between a proximal portion (110) and a distal portion (120) and in the lateral direction (Y) over a determined width (l₁₀₀) between a first lateral edge (101) and a second lateral edge (102),
**characterized in that** the method comprises weaving the first to fifth portions (130, 140, 150, 160, 170) each extending over the determined length of the fibrous texture in the longitudinal direction (X) and over a determined width in the lateral direction (Y), the first portion (130) extending in the lateral direction from the first lateral edge (101), the second portion (140) extending in the lateral direction from the first portion, the third portion (150) extending in the lateral direction from the second portion, the fourth portion (160) extending in the lateral direction from the third portion, the fifth portion (170) extending in the lateral direction from the fourth portion and up to the second lateral edge (102), the first and fifth portions (130, 170) having a width in the lateral direction greater than the width of the second and fourth portions (140, 160) and less than the width of the third portion (150),
**in that** the first and fifth portions (130, 170) each comprise warp strands composed of a first type of fibers corresponding to carbon fibers having a Young's modulus greater than 290 GPa and an elongation at break comprised between 1.2% and 2% and warp strands composed of a second type of fibers having a Young's modulus comprised between 150 GPa and 250 GPa and an elongation at break comprised between 4% and 6%,
and **in that** the second and fourth portions (140, 160) each comprise warp strands composed of the first type of fibers, warp strands composed of the second type of fibers, and warp strands composed of a third type of fibers corresponding to carbon fibers having a Young's modulus greater than 250 GPa and an elongation at break comprised between 1.5% and 2.5%, the third portion (150) comprising warp strands made of the third type of fibers
